# EUROPEAN PATENT SPECIFICATION

(11) **EP 2 547 936 B1**
(45) Date of publication and mention of the grant of the patent: **15.01.2014**
(21) Application number: 11710602.1
(22) Date of filing: 10.03.2011
(51) Int. Cl.: F16K 47/04

(54) **VALVES HAVING CERAMIC TRIM WITH PROTECTED SHUT-OFF SURFACES**
KERAMISCHER EINBAUDROSSEL EINES VENTILS MIT GESCHÜTZTEN ABSPERRFLÄCHEN
ORGANE INTERNE D'UNE SOUPAPE AVEC DES SURFACES D'ARRÊT PROTEGÉS

(30) Priority: 19.03.2010 US 315717 P
(43) Date of publication of application: 23.01.2013
(73) Proprietor: Fisher Controls International LLC, Marshalltown, IA 50158 (US)
(72) Inventor: RICHARDSON, Jonathan, W., Marshalltown IA 50158 (US); BACKES, Robert, L., Marshalltown IA 50158 (US); MERWALD, Edward, J., Marshaltown IA 50158 (US); HAMMOND, Christopher, J., Marshalltown IA 50158 (US)
(74) Representative: Bohnenberger, Johannes
(86) International application number: PCT/US2011/027948
(87) International publication number: WO 2011/115816

(56) References cited:
- DE-A1- 3 148 521
- US-A- 4 969 628

## Description

### FIELD OF THE DISCLOSURE

This disclosure relates generally to control valves and, more particularly, to valves having ceramic trim with protected shut-off surfaces.

### BACKGROUND

Control valves are often used in process control plants or systems to control the flow of process fluids. In general, control valves typically include a valve trim assembly or apparatus that includes a valve plug (e.g., a metal valve plug) and a valve seat (e.g., a metal seat ring) that are disposed in a fluid path to control the flow of fluid through a passageway between an inlet and an outlet. A valve stem or shaft operatively couples the valve plug to an actuator such as, for example, a pneumatic actuator, a manual actuator, etc. The actuator moves the valve plug between an open position at which the valve plug is spaced from the valve seat to allow fluid flow through the passageway and a closed position at which the valve plug sealingly engages the valve seat to prevent fluid flow through the passageway.

In severe service applications such as, for example, in the petrochemical industry, control valves may be subjected to severely erosive service conditions that can rapidly wear or reduce the operating life of the valve trim (e.g., a valve seat, a valve plug, etc.). For example, the valve trim may be exposed to flowing process fluids that contain entrained particulate (e.g., ceramic catalyst fines). The entrained particulate can damage (e.g., remove material) and/or rapidly wear a sealing surface of a valve seat and/or a sealing surface of a valve plug made of metal as the fluid carrying the particulate flows between the inlet and the outlet. Such damage is exacerbated in high differential pressure applications because the particulate may impact the metallic surfaces of the valve seat and/or the valve plug at relatively high velocities. A sealing surface of the valve seat and/or the valve plug that is damaged or worn in this manner becomes ineffective at controlling fluid flow, resulting in a significantly reduced operating life of the valve trim.

In severe service applications, valve seats and/or valve plugs made of ceramic materials are often employed to reduce damage and/or wear caused by severely erosive process fluids that may otherwise damage metallic valve seats and/or valve plugs, thereby increasing the operating life of the valve seat and/or valve plug. However, although ceramic valve seats and/or valve plugs are highly resistant to the above-noted erosive or corrosive effects of particulate and the like, such ceramic valve plugs and/or valve seats may not withstand relatively high actuator thrust forces that are often required to provide a tight fluid flow shut-off. For example, the actuator imparts a relatively high seating load or force to the valve plug when the valve plug sealingly engages the valve seat to provide a relatively tight shut-off and prevent or restrict fluid flow through the passageway of the valve for on/off applications. Under such high loads, a valve plug and/or valve seat made of ceramic can fracture, shatter or crack.

DE-A-3148521 shows a valve trim apparatus for use with a fluid valve, comprising: a valve seat composed of a non-ceramic material and having a sleeve insert; and a closure member having a primary flow control member and a secondary flow control member, the secondary flow control member is to move within an aperture of the sleeve insert to modulate a fluid flow through the valve seat as the primary flow control member disengages from the non-ceramic material of the valve seat.

### SUMMARY

In one example, a valve trim apparatus includes a valve seat composed of a non-ceramic material and having a sleeve insert composed of a ceramic material. A closure member has a primary flow control member and a secondary flow control member. The secondary flow control member is composed of the ceramic material and fitted within a cavity of the closure member. The primary flow control member sealingly engages the non-ceramic material of the valve seat and the secondary flow control member moves within an aperture of the sleeve insert to modulate a fluid flow through the valve seat as the primary flow control member disengages from the non-ceramic material of the valve seat.

In another example, a valve trim apparatus includes a valve seat composed of a metallic material having an insert composed of a ceramic material. A valve plug assembly has a primary metallic seating surface and a secondary ceramic throttling surface that is surrounded by the metallic seating surface. The throttling surface moves relative to an aperture of the insert to reduce a pressure drop across the metallic seating surface as the valve plug assembly disengages from the valve seat.

### BRIEF DESCRIPTION OF THE DRAWINGS

FIG. 1 illustrates a known control valve implemented with a known valve trim apparatus.
FIG. 2A illustrates an example control valve implemented with an example valve trim apparatus described herein.
FIG. 2B illustrates an enlarged portion of the example valve trim apparatus illustrated in FIG. 2A.
FIG. 3A illustrates the example control valve and the valve trim apparatus of FIGS. 2A and 2B shown in an intermediate position.
FIG. 3B illustrates an enlarged portion of the example valve trim apparatus illustrated in FIG. 3A.
FIG. 4A illustrates the example control valve and the valve trim apparatus of FIGS. 2A, 2B, 3A and 3B shown in an open position.
FIG. 4B illustrates an enlarged portion of the example valve trim apparatus illustrated in FIG. 4A.

### DETAILED DESCRIPTION

In general, the example valve trim apparatus described herein may be used with severely erosive process fluids such as, for example, process fluids (e.g., hydrogen fluids) having entrained particulate (e.g., ceramic catalyst) that often cause damage or erosion to conventional valve trim components. The example valve trim apparatus described herein significantly increases the operational life of the valve trim compared to conventional valve trim.

More specifically, the example valve trim apparatus described herein provides a throttling portion or function separate from a shut-off portion or function. Further, the example trim apparatus shifts a significant portion of a pressure differential of the process fluid to the throttling portion of the valve trim apparatus and, thus, minimizes the pressure differential across the shut-off portion of the valve trim apparatus. Additionally, a relatively large seat load or thrust force may be imparted to the shut-off portion of the valve trim apparatus while at the same time minimizing any load imparted to the throttling portion of the valve trim apparatus.

In particular, an example trim apparatus described herein includes a valve seat composed of a metallic material that includes an insert composed of a ceramic material. A valve plug assembly of the example trim apparatus has a primary metallic seating surface and a secondary ceramic throttling surface that is surrounded by the metallic seating surface. In operation, the throttling surface moves relative to an aperture of the insert to reduce a pressure drop to which the metallic seating surface is exposed as the valve plug assembly disengages from the valve seat. Thus, the trim apparatus includes a ceramic throttling surface or ceramic trim to protect metallic surfaces or shut-off surfaces of the trim apparatus.

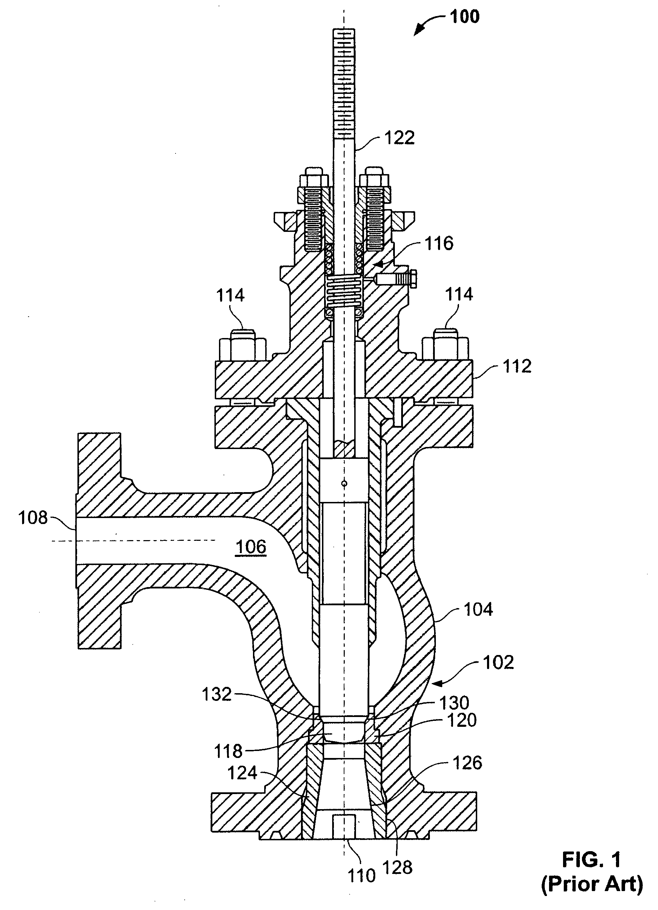

FIG. 1 illustrates a known control valve assembly 100 (e.g., a flow down angle-style control valve) implemented with a known valve trim apparatus 102 that may be used in severe service applications (e.g., severely erosive process fluid, high pressure applications, etc.). Referring to FIG. 1, the example control valve assembly 100 includes a valve body 104 that defines a fluid flow passageway 106 between an inlet or side port 108 and an outlet or bottom port 110. In this example, the inlet 108 is turned at an angle from the outlet 110. A bonnet 112 is coupled to the valve body 104 via fasteners 114 and couples the valve body 104 to an actuator (not shown). The bonnet 112 also houses a packing system 116 to prevent leakage of process fluid to the environment.

The valve trim apparatus 102 includes a flow control member or valve plug 118 and a valve seat or seat ring 120 disposed within the passageway 106. An actuator (e.g., a pneumatic actuator, an electric actuator, a hydraulic actuator, etc.) may be operatively coupled to the valve plug 118 via a valve stem 122 and to move the valve plug 118 relative to the seat ring 120 to control the fluid flow through the passageway 106 between the inlet 108 and the outlet 110. A seat ring retainer or liner 124 retains the seat ring 120 within the valve body 104 and has an elongated body 126 that extends to protect a surface 128 of the outlet 110 from adverse process effects such as, for example, abrasion, erosion, corrosion, etc. In the illustrated example of FIG. 1, the seat ring 120 and the liner 124 are separate pieces such that the liner 124 engages the seat ring 120 via an interference fit to retain the seat ring 120 within the valve body 104. In other examples, the liner 124 may be integrally formed with the seat ring 120 to form a substantially unity structure.

In operation, the actuator drives the valve stem 122 and, thus, the valve plug 118 between a closed position at which the valve plug 118 is sealingly engaged with the seat ring 120 to prevent or restrict fluid flow through the passageway 106 between the inlet 108 and the outlet 110 and a fully open or maximum flow position at which the valve plug 118 is separated from the seat ring 120 to allow fluid flow through the passageway 106 between the inlet 108 and the outlet 110.

In non-severe fluid conditions (e.g., non-erosive fluid conditions, relatively low pressure differential applications, etc.), the valve plug 118 and/or the seat ring 120 are typically made of a metallic material such as, for example, stainless steel or any other suitable metallic materials. However, in severe service applications, a sealing surface 130 of the valve plug 118 and/or a seating surface 132 of the seat ring 120 may wear rapidly or become damaged. For example, in high differential pressure applications, fluid (e.g., a liquid, gas, steam, etc.) at the inlet 108 of the valve 100 typically has a relatively high pressure that is reduced to a substantially lower pressure at the outlet 110 of the valve 100. The relatively high pressure differential across the valve 100 significantly increases the velocity of the fluid flowing through the passageway 106 of the valve body 104. The increased velocity can cause the fluid flowing through the valve 100 to experience turbulent flow, which can impart unwanted fluid forces or other fluid flow effects that may cause damage (e.g., cause material loss) to the surface 130 of the seat ring 120 and/or the surface 132 of the valve plug 118, thereby reducing the operating life of the seat ring 120 and/or the valve plug 118.

Additionally or alternatively, in severe service applications (e.g., petrochemical applications), the valve trim apparatus 102 may be exposed to severely erosive and/or corrosive fluid conditions that can rapidly wear or cause material loss to the surfaces 130 and/or 132 and significantly reduce the operating life of the valve trim apparatus 102. For example, the valve plug 118 and/or the seat ring 120 may be exposed to process fluids entrained with particulate (e.g., ceramic catalyst fines), which can wear or degrade the surfaces 130 and/or 132. Further, such erosive damage is exacerbated when severely erosive process fluids that are entrained with particulate (e.g., ceramic catalyst fines) are subjected to a relatively high pressure differential and, thus, increased velocity across the valve trim apparatus 102 because the particulate may impact the surfaces 130 and/or 132 at a relatively high velocity. Such erosive high velocity fluid flows can cause rapid deterioration and/or wear (e.g., material loss) to the surfaces 130 and/or 132 and significantly decrease the operating life of the valve trim apparatus 102.

In severely erosive fluid conditions, valve plugs and/or valve seats made of ceramic materials are often employed because ceramic materials have relatively high resistance to erosive or corrosive fluid conditions and high pressure differential applications, thereby increasing the operating life of the valve plugs and/or valve seats. For example, referring to the example of FIG. 1, the valve plug 118 and/or the seat ring 120 may be made of a ceramic material. In that case, the liner 124 retains the ceramic seat ring 120 within the valve body 104. However, coupling the valve plug 118 to the valve stem 122 may require a complex mechanical fastening mechanism. Additionally or alternatively, as noted above, the ceramic valve plug 118 may become damaged (e.g., fracture, crack, shatter, etc.) due to thrust forces and/or seat loads imparted to the valve plug 118 via an actuator sized to provide tight shut-off control during on/off flow applications.

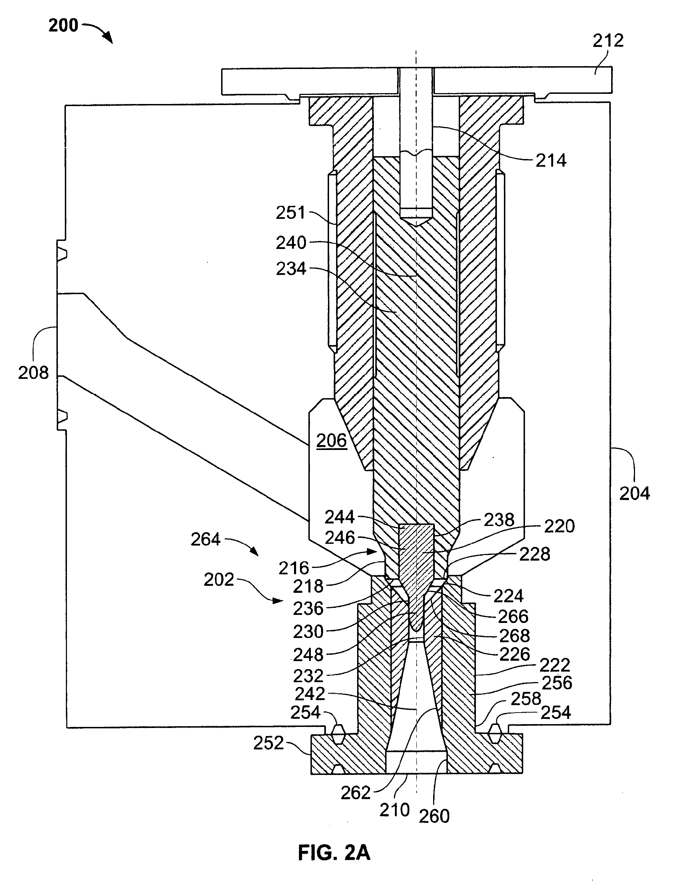

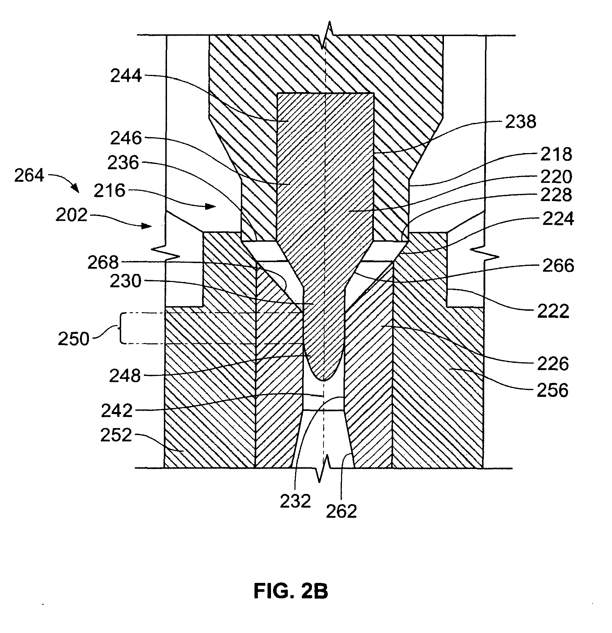

FIG. 2A illustrates an example fluid control valve 200 implemented with an example valve trim apparatus 202 described herein that may be employed in high pressure differential applications and/or severely erosive or corrosive applications such as, for example, applications involving process fluids entrained with particulate (e.g., ceramic catalyst fines). FIG. 2B illustrates an enlarged portion of the example valve trim apparatus 202 shown in FIG. 2A.

Referring to FIGS. 2A and 2B, the valve 200 includes a valve body 204 defining a passageway 206 between an inlet or side port 208 and an outlet or bottom port 210. The valve trim apparatus 202 is disposed within the passageway 206 of the valve body 204 to control the fluid flow between the inlet 208 and the outlet 210. In the illustrated example, the inlet 208 is substantially angled relative to the outlet 210. A bonnet 212 is coupled to the valve body 204 (e.g., via fasteners) and also couples the valve body 204 to an actuator (not shown). The actuator is operatively coupled to the valve trim apparatus 202 via a valve stem 214.

The valve trim apparatus 202 includes a valve plug assembly or closure member 216 having a primary flow control member 218 and a secondary flow control member 220. The valve trim apparatus 202 also includes a valve seat 222 having a sealing surface 224 and a sleeve insert 226. In this example, the primary flow control member 218 and the sealing surface 224 are composed of a non-ceramic material and the secondary flow control member 220 and the sleeve insert 226 are composed of a ceramic material. In some examples, the valve seat 222 and the primary flow control member 218 may be composed of the same non-ceramic material. Alternatively, the valve seat 222 may be composed of a first non-ceramic material and the primary flow control member 218 may be composed of a second non-ceramic material different than the first non-ceramic material. Likewise, the sleeve insert 226 and the secondary flow control member 220 may be composed of the same ceramic material. Alternatively, the sleeve insert 226 may be made of a first ceramic material and the secondary flow control member 220 may be made of a second ceramic material different from the first ceramic material.

The non-ceramic material may include a metallic material, a high strength metallic alloy such as, for example, a nickel, a nickel-based alloy, a material having high strength properties, a non-ceramic material having an erosion or corrosion resistant properties, a thermoplastic material, an elastomeric material, and/or any other non-ceramic material(s). The ceramic material may include, for example, carbide, tungsten carbide, and/or any other ceramic materials that are highly resistant to erosive and corrosive conditions. In one particular example, the primary flow control member 218 and the valve seat 222 are composed of nickel alloy and the secondary flow control member 220 and the sleeve insert 226 are composed of tungsten carbide.

The primary flow control member 218 cooperates with or moves relative to the sealing surface 224 to provide an on/off function or shut-off control to prevent fluid flow through the passageway 206 when the valve 200 is in a closed position. The secondary flow control member 220 cooperates with or moves relative to the sleeve insert 226 to modulate or throttle fluid flow through the passageway 206 between the inlet 208 and the outlet 210. As more clearly shown in FIG. 2B, the primary flow control member 218 includes a seating surface 228 (e.g., a metallic seating surface) that sealingly engages the sealing surface 224 (e.g., a metallic sealing surface) of the valve seat 222 to provide a relatively tight shut-off. The secondary flow control member 220 includes a throttling surface 230 (e.g., a ceramic throttling surface) that moves relative to an aperture 232 of the sleeve insert 226 (e.g., a ceramic insert) to modulate fluid flow. In this example, the seating surface 228 of the primary flow control member 218 is integrally formed with a body 234 of the closure member 216. However in other examples, the primary flow control member 218 may be an insert coupled to (e.g., disposed within) a surface 236 (e.g., a slot, a groove, an opening, etc.) of the closure member 216.

As shown, the closure member 216 includes a cavity 238 having an axis 240 coaxially aligned with an axis 242 of the valve seat 222 to receive the secondary flow control member 220. In the illustrated example, the secondary flow control member 220 includes a valve plug insert 244 that has a base 246 and an elongated portion 248 protruding from the base 246. When coupled to the closure member 216, the base 246 is disposed within the cavity 238 of the closure member 216 such that the elongated portion 248 extends toward the aperture 232 of the sleeve insert 226. In this example, the secondary flow control member 220 is composed of a ceramic material and is fitted (e.g., shrink-fitted) within the cavity 238 of the closure member 216 and is surrounded by the primary flow control member 218. Thus, in the illustrated example, the closure member 216 includes an assembly having the metallic seating surface 228 and the ceramic throttling surface 230 surrounded by the metallic seating surface 228. However, in other examples, any other suitable manufacturing process(es) and/or fasteners (e.g., mechanical fasteners) may be employed to couple the secondary flow control member 220 to the closure member 216.

Additionally, as discussed in greater detail below, the elongated portion 248 provides a flow control dead-band zone or area 250 (FIG. 2B) to reduce a pressure drop to which the metallic seating surface 228 and/or the metallic sealing surface 224 are exposed as the primary flow control member 218 disengages from the valve seat 222. A guide 251 (e.g., a cylindrical guide) slidably receives the closure member 216 and guides the closure member 216 as the actuator moves the closure member 216 between a first position (e.g., a fully closed position) and a second position (e.g., a fully open position).

The example valve 200 of FIGS. 2A and 2B includes a liner 252 that is integrally formed with the valve seat 222 as a substantially unitary member or structure. In this example, the liner 252 is threadably coupled to the valve body 204 via fasteners 254. In other examples, the liner 252 may be clamped between an outlet flange (not shown) of the valve body 204 and downstream piping (not shown). Also, in other examples, the valve seat 222 and the liner 252 may be separate parts. For example, the valve seat 222 may be a seat ring that is retained within the valve body 204 via the liner 252. In this example, the liner 252 includes an elongated body 256 that extends to protect a surface 258 of the outlet 210 from adverse process effects such as, for example, abrasion, corrosion, etc.

In the illustrated example, the sleeve insert 226 is at least partially disposed or fitted (e.g., shrink-fitted) within an opening 260 of the liner 252 and extends along a portion of the elongated body 256 of the liner 252. As shown, the aperture 232 of the sleeve insert 226 has a contoured inner surface 262 (e.g., a venturi-shaped inner surface) to optimize the fluid flow characteristics between the inlet 208 and the outlet 210. The inner surface 262 of the aperture 232 may be formed via, for example, grinding or any other suitable manufacturing process(es). However, in other examples, the inner surface 262 of the aperture 232 may be linearly tapered or may include any other suitably-shaped opening.
Alternatively, in other examples in which the liner 252 is not employed, the sleeve insert 226 may be at least partially disposed within an opening of a valve seat or seat ring via, for example, shrink-fit or any other suitable manufacturing process(es). Such examples include, but are not limited to, linear valves, rotary valves, and/or any other suitable fluid flow devices.

In operation, an actuator may stroke or move the closure member 216 between a closed position or zero percent (0%) stroke length travel and an open position or 100 percent stroke length travel. FIGS. 2A and 2B illustrate the closure member 216 at a closed position 264 (i.e., a zero percent travel of the stroke length) relative to the valve seat 222. In the closed position 264, the metallic seating surface 228 of the primary flow control member 218 sealingly engages the metallic sealing surface 224 of the valve seat 222 to prevent fluid flow through the passageway 206 between the inlet 208 and the outlet 210. Also, a maximum length or amount of the dead-band zone or area 250 of the elongated portion 248 of the secondary flow control member 220 is disposed within the aperture 232 of the sleeve insert 226 when the valve 200 is in the closed position 264.

In the closed position 264, the actuator imparts a large amount or portion (e.g., substantially all) of a seat load and/or a thrust load to the metallic seating surface 228 of the primary flow control member 218 and/or the metallic sealing surface 224 of the valve seat 222, and such forces are significantly minimized relative to the secondary flow control member 220 (e.g., the ceramic throttling surface 230) and the sleeve insert 226. The actuator imparts the seat load and/or trust force to the primary flow control member 218 and/or the valve seat 222 because the seating surface 228 of the primary flow control member 218 engages the sealing surface 224 of the valve seat 222 before a critical surface or area 266 of the secondary flow control member 220 engages a critical surface or area 268 of the sleeve insert 226. Thus, the primary flow control member 218 engages valve seat 222 such that the primary flow control member 218 provides a reactive axial force in a direction of the axis 240. Although the elongated portion 248 is engaged with the sleeve insert 226 at the closed position 264, an axial force in the direction of the axis 240 toward the surface 236 is relatively small or negligible. Thus, the primary flow control member protects the secondary flow control member from seat load and/or actuator thrust forces.

Thus, the seat loads and/or actuator thrust forces imparted to the secondary flow control member 220 and/or the sleeve insert 226 are relatively small or negligible. In this example, the seating surface 228 of primary flow control member 218 and the sealing surface 224 of the valve seat 222 are composed of a metallic material. Thus, the metallic surfaces 228 and/or 224 can withstand the relatively high thrust actuator loads and/or seat loads necessary to achieve tight shut-off performance or control. Additionally, should the metallic surfaces 228 and/or 224 of the respective primary flow control member 218 and/or the valve seat 222 become worn, the metallic surfaces can be reconditioned via, for example, machining or any other suitable process(es), to provide smooth sealing surfaces and thereby extend the operational life of the valve trim apparatus 202.

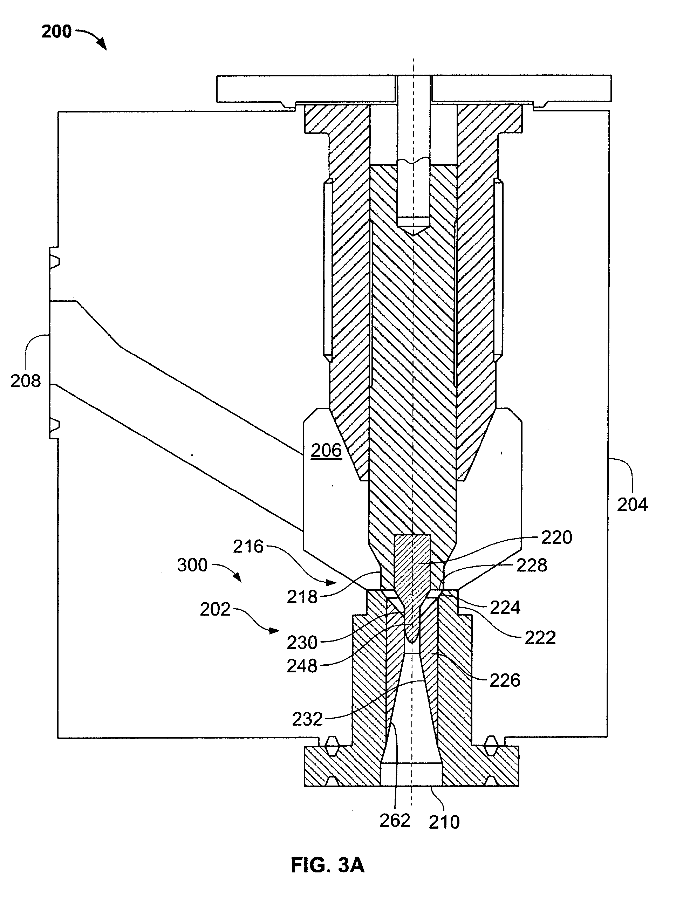

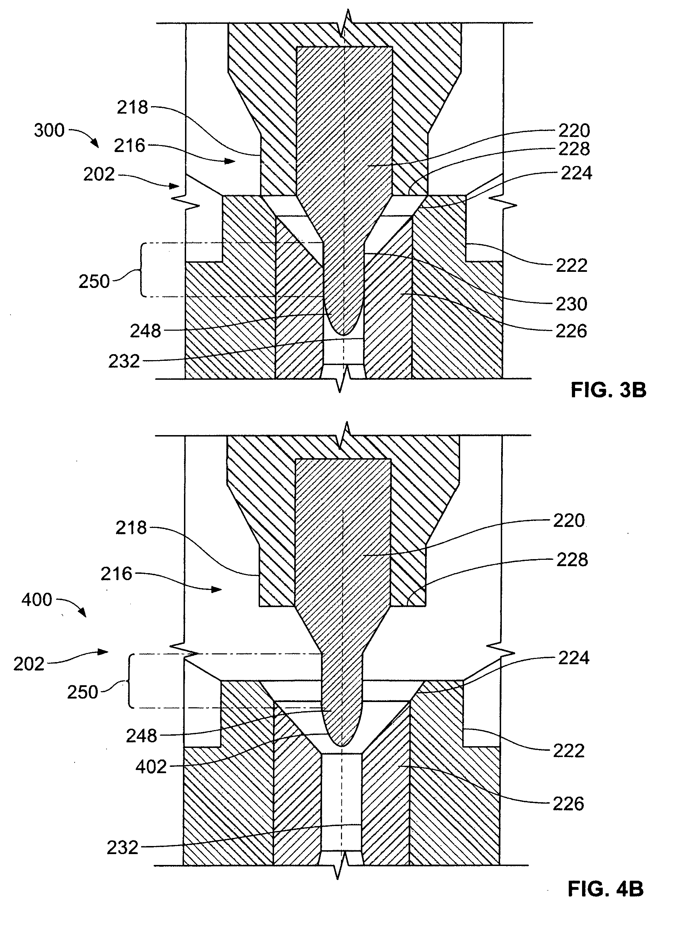

FIGS. 3A and 3B illustrate the closure member 216 at an intermediate position 300. When the primary flow control member 218 moves between the closed position 264 shown in FIGS. 2A and 2B and the intermediate position 300 shown in FIGS. 3A and 3B, the dead-band zone or area 250 (FIG. 3B) of the elongated portion 248 is adjacent the inner surface 262 of the aperture 232 and moves relative to the aperture 232 of the sleeve insert 226 over a portion of the overall stroke length travel of the primary flow control member 218 (i.e., the closure member 216). In operation, the secondary flow control member 220 moves within the aperture 232 of the sleeve insert 226 as the seating surface 228 of the primary flow control member 218 disengages from the sealing surface 224 of the valve seat 222. However, as the primary flow control member 218 and the secondary flow control member 220 move between the closed position 264 and the intermediate position 300, the dead-band zone or area 250 of the elongated portion 248 remains adjacent the aperture 232 of the sleeve insert 226 to restrict or inhibit fluid flow through the passageway 206 of the valve 200. Such fluid flow is inhibited or restricted due to the tight tolerances between an outer surface of the dead-band zone or area 250 of the elongated portion 248 and a diameter or size of the aperture 232 of the sleeve insert 226.

Thus, the dead-band zone or area 250 moves adjacent the aperture 232 of the sleeve insert 226 to provide an effective dead-band stroke length travel to the overall stroke length of the primary flow control member 218. The dead-band area or zone 250 of the elongated portion 248 can be sized or dimensioned to provide an effective dead-band stroke length travel over a predetermined stroke length travel (e.g., a 25% stroke length travel) of the primary flow control member 218 as the actuator strokes the closure member 216 (and, thus, the primary flow control member 218) between the closed position 264 and an intermediate position (e.g., the intermediate position 300).

In this manner, as the primary flow control member 218 disengages from the sealing surface 224 and moves away from the valve seat 222, the fluid flows across the surfaces 228 and 224 and toward the secondary flow control member 220. However, because the secondary flow control member 220 restricts or inhibits fluid flow through the valve 200 while the dead-band zone or area 250 of the elongated portion is adjacent the aperture 232, a high pressure fluid at the inlet 208 flows across the seating surface 228 of the primary closure member 218 and/or the sealing surface 224 of the valve seat 222 without a significant pressure drop or differential. In other words, the pressure differential across the seating surface 228 of the primary flow control member 218 and/or the sealing surface 224 of the valve seat 222 is relatively small or negligible. Reducing or minimizing a pressure drop or differential across the seating surface 228 and/or the sealing surface 224 significantly increases the operating life of the surfaces 228 and/or 224 and, thus, the valve trim apparatus 202.

The above-noted example is advantageous in high differential pressure applications and/or severely erosive fluids containing particulate (e.g., ceramic catalyst fines), which can cause material loss or damage to the metallic surfaces 228 and/or 224 of the respective primary flow control member 218 and the valve seat 222. In this example, the ceramic throttling surface 230 of the secondary flow control member 220 moves relative to the aperture 232 of the ceramic sleeve insert 226 to reduce a pressure drop to which the metallic surfaces 228 and/or 224 are otherwise exposed as the closure member 216 disengages and moves away from the valve seat 222 as shown in FIGS. 3A and 3B.

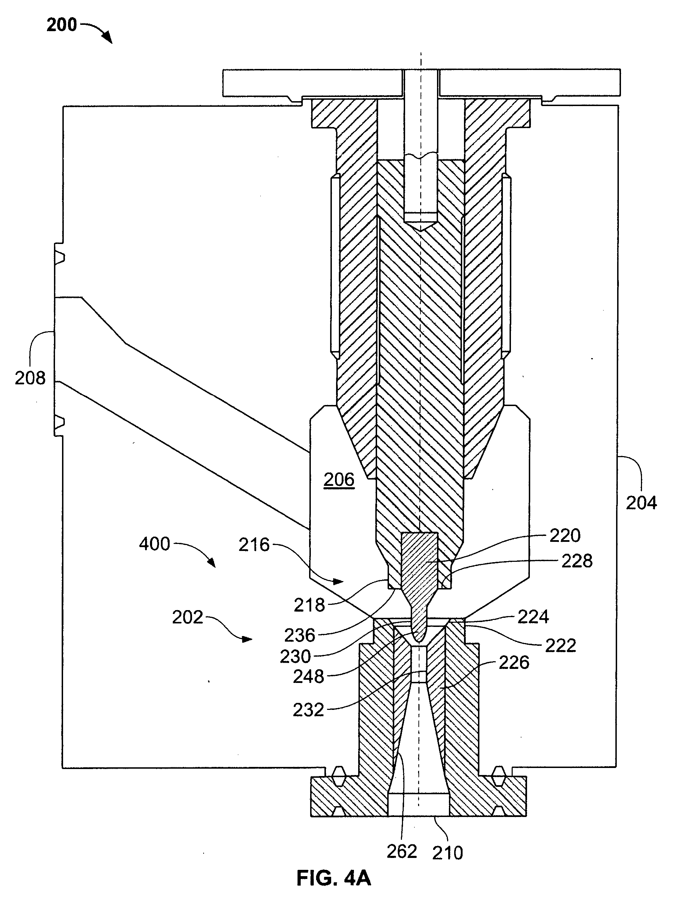

FIGS. 4A and 4B illustrate the closure member 216 at a fully open position 400 relative to the valve seat 222 and the sleeve insert 226. As most clearly seen in FIG. 4B, the elongated portion 248 includes a contoured tip or tapered end 402. As the actuator strokes the closure member 216 between the intermediate position 300 of FIGS. 3A and 3B and the fully open position 400 of FIGS. 4A and 4B, the tapered end 402 enables fluid flow through the passageway 206 of the valve 200 as the dead-band zone or area 250 moves away from the aperture 232. In other words, the tapered end 402 reduces the tight tolerances between the outer surface of the dead-band zone or area 250 and the inner surface 262 of the aperture 232 to allow fluid flow through the valve 200 as the dead-band zone or area 250 disengages from and moves away from the aperture 232 of the sleeve insert 226. Additionally, the tapered end 402 controls the rate of fluid flow through the valve 200 when the tapered end 402 moves within the aperture 232 between a first position and a second position when the dead-band zone or area 250 is spaced away from aperture 232 as the elongated portion 248 moves between the intermediate position 300 and the open position 400 when the elongate portion 248 is adjacent the aperture 232.

At the fully open position 400, the primary flow control member 218 is separated from the valve seat 222 and the secondary flow control member 220 is spaced away from the sleeve insert 226 to enable a maximum fluid flow through the passageway 206 of the valve body 204 between the inlet 208 and the outlet 210. As the secondary flow control member 220 moves away from the sleeve insert 226 between the intermediate position 300 of FIGS. 3A and 3B and the fully open position 400 of FIGS. 4A and 4B, the fluid flowing through the aperture 232 undergoes a pressure drop across the sleeve insert 226 and the secondary flow control member 220. Thus, the secondary flow control member 220 (e.g., a ceramic trim) protects the shut-off surfaces (i.e., seating surface surfaces 228 and/or the sealing surface 224). The secondary flow control member 220 and the sleeve insert 226 can withstand relatively large pressure drops or differentials and/or severely erosive or corrosive fluid conditions because they are made of a ceramic material, which can resist wear and degradation under such conditions.

As noted above, the secondary flow control member 220 moves relative to the aperture 232 of the sleeve insert 226 to reduce a pressure drop to which the primary flow control member 218 and the valve seat 222 would otherwise be exposed as the closure member 216 disengages from the valve seat 222 as shown in FIGS. 3A and 3B. Additionally, as shown in FIGS. 4A and 4B, the secondary flow control member 220 moves relative to the sleeve insert 226 to throttle a fluid flow through the passageway 206 between the inlet 208 and the outlet 210.

The example valve trim apparatus 202 described herein enables a single valve to control the throttling function of the valve trim apparatus 202 separately from the shut-off function of the valve trim apparatus 202. By separating the two functions and adding an effective dead-band stroke travel to the overall stroke length travel of closure member 216, the pressure drop at the metallic surfaces 228 and 224 are significantly reduced or negated, thereby reducing damage or material wear to the metallic surfaces 228 and 224 and significantly increasing the operational life of the valve trim apparatus 202. Further, separating the sealing surfaces 228 and 224 from the throttling surfaces 230 and the sleeve insert 226 enables the metallic surfaces 228 and/or 224 to be machined or reconditioned, thereby increasing the operational life of the valve trim apparatus 202.

Due to the angle of the valve body 204, angle-style valves advantageously allow for easy draining because the valve body or flow path of such valves does not have any pockets or areas that allow accumulation of fluid and/or residue. Thus, angle-style control valves are typically used in the chemical and petroleum industries, which often require control of residual oils or other liquids with coking properties. However, the example valve trim apparatus described herein are not limited to use with angle-style fluid valves. In other examples, fluid valves such as, for example, globe valves, rotary valves, linear valves, etc., may be employed.

Although certain apparatus have been described herein, the scope of coverage of this patent is not limited thereto. To the contrary, this patent covers all apparatus fairly falling within the scope of the appended claims either literally or under the doctrine of equivalents.

The invention is defined by the appended claims only.

## Claims

1. A valve trim apparatus (202) for use with a fluid valve (200), comprising:
a valve seat (222) composed of a non-ceramic material and having a sleeve insert (226) composed of a ceramic material; and
a closure member (216) having a primary flow control member (218) and a secondary flow control member (220), the secondary flow control member (220) being composed of the ceramic material and fitted within a cavity (238) of the closure member (216), wherein the primary flow control member (218) is to sealingly engage the non-ceramic material of the valve seat (222) and the secondary flow control member (220) is to move within an aperture (232) of the sleeve insert (226) to modulate a fluid flow through the valve seat (222) as the primary flow control member (218) disengages from the non-ceramic material of the valve seat (222).

2. A valve trim apparatus as defined in claim 1, wherein the primary flow control member (218) comprises of the non-ceramic material.

3. A valve trim apparatus as defined in claim 1, wherein the non-ceramic material comprises a metallic alloy.

4. A valve trim apparatus as defined in claim 1, further comprising a liner (252) to retain the valve seat (222) and the sleeve insert (226) within a body (204) of the fluid valve (200), and wherein the liner (252) comprises an elongated body (256).

5. A valve trim apparatus as defined in claim 4, wherein the sleeve insert (226) is shrink-fitted within an opening of the liner (252) and the valve seat (222) is integrally formed with the liner (252).

6. A valve trim apparatus as defined in claim 1, wherein the sleeve insert (226) includes an opening having a contoured inner surface.

7. A valve trim apparatus as defined in claim 1, wherein the secondary flow control member (220) comprises a valve plug (244) having a base (246) disposed within the cavity (238) of the closure member (218) and an elongated portion (248) dimensioned to engage the sleeve insert (226) over a portion of an overall stroke length of the primary flow control member (218) to provide an effective fluid flow dead-band.

8. A valve trim apparatus of claim 7, wherein that the elongated portion (248) remains engaged with the sleeve insert (226) when the primary flow control member (218) moves between a closed position at which the primary flow control member (218) sealingly engages the valve seat (222) and an intermediate position at which the primary flow control member (218) disengages the valve seat (222), and wherein the elongated portion moves away from the sleeve insert (226) when the primary flow control member (218) moves between the intermediate position and a fully open position of the fluid valve (200).

9. A valve trim apparatus as defined in claim 1, wherein the secondary flow control member (220) moves relative to the sleeve insert (226) to throttle a fluid flow between an inlet (208) and an outlet (210) of the fluid valve (200).

10. A valve trim apparatus as defined in claim 1, wherein the secondary flow control member (220) is shrink-fitted within the cavity (238) of the closure member (216) and surrounded by the primary flow control member (218).

11. The valve trim apparatus of claim 1, wherein:
the primary flow control member (218) includes a metallic seating surface (228) and the secondary flow control member (220) includes a ceramic throttling surface (230) surrounded by the metallic seating surface (228), wherein the ceramic throttling surface (230) moves relative to an aperture (232) of the sleeve insert (226) to reduce a pressure drop across the metallic seating surface (228) as the closure member (216) disengages from the valve seat (222).

12. A valve trim apparatus as defined in claim 11, wherein the metallic material comprises a metallic alloy and the ceramic material comprises a carbide.

13. A valve trim apparatus as defined in claim 11, wherein the ceramic throttling surface (230) includes an elongated portion that protrudes toward the sleeve insert (226) of the valve seat (222).

14. A valve trim apparatus as defined in claim 11, further comprising a liner (252) having an opening to receive at least a portion of the sleeve insert (226), and wherein the liner (252) and the valve seat (222) are integrally formed as a unitary structure.

15. A valve trim apparatus as defined in claim 12, wherein the sleeve insert (226) is shrink-fitted within the opening of the liner (252).

## Patentansprüche

1. Ventilgarniturvorrichtung (202) zur Verwendung mit einem Fluidventil (200), Folgendes aufweisend:
einen Ventilsitz (222), der aus einem nichtkeramischen Material besteht und einen Hülseneinsatz (226) aufweist, der aus einem keramischen Material besteht; und
ein Verschlussteil (216) mit einem primären Strömungsregelungsteil (218) und einem sekundären Strömungsregelungsteil (220), wobei das sekundäre Strömungsregelungsteil (220) aus dem keramischen Material besteht und in einen Hohlraum (238) des Verschlussteils (216) eingepasst ist, wobei das primäre Strömungsregelungsteil (218) dazu bestimmt ist, abdichtend am nichtkeramischen Material des Ventilsitzes (222) anzugreifen, und das sekundäre Strömungsregelungsteil (220) dazu bestimmt ist, sich in einem Durchlass (232) des Hülseneinsatzes (226) zu bewegen, um eine Fluidströmung durch den Ventilsitz (222) zu modulieren, wenn das primäre Strömungsregelungsteil (218) sich vom nichtkeramischen Material des Ventilsitzes (222) löst.

2. Ventilgarniturvorrichtung nach Anspruch 1, wobei das primäre Strömungsregelungsteil (218) das nichtkeramische Material umfasst.

3. Ventilgarniturvorrichtung nach Anspruch 1, wobei das nichtkeramische Material eine Metalllegierung umfasst.

4. Ventilgarniturvorrichtung nach Anspruch 1, darüber hinaus eine Buchse (252) umfassend, um den Ventilsitz (222) und den Hülseneinsatz (226) in einem Körper (204) des Fluidventils (200) zurückzuhalten, und wobei die Buchse (252) einen langgestreckten Körper (256) aufweist.

5. Ventilgarniturvorrichtung nach Anspruch 4, wobei der Hülseneinsatz (226) in eine Öffnung der Buchse (252) eingeschrumpft ist, und der Ventilsitz (222) einstückig mit der Buchse (252) ausgebildet ist.

6. Ventilgarniturvorrichtung nach Anspruch 1, wobei der Hülseneinsatz (226) eine Öffnung mit einer konturierten Innenfläche aufweist.

7. Ventilgarniturvorrichtung nach Anspruch 1, wobei das sekundäre Strömungsregelungsteil (220) einen Ventilstopfen (244) mit einer Basis (246), die in dem Hohlraum (238) des Verschlussteils (218) angeordnet ist, und einen langgestreckten Abschnitt (248) aufweist, der dazu bemessen ist, am Hülseneinsatz (226) über einen Abschnitt einer Gesamthublänge des primären Strömungsregelungsteils (218) anzugreifen, um eine wirksame Fluidströmungstotzone bereitzustellen.

8. Ventilgarniturvorrichtung nach Anspruch 7, wobei der langgestreckte Abschnitt (248) am Hülseneinsatz (226) in Angriff bleibt, wenn sich das primäre Strömungsregelungsteil (218) zwischen einer geschlossenen Stellung, in der das primäre Strömungsregelungsteil (218) abdichtend am Ventilsitz (222) angreift, und einer Zwischenstellung bewegt, in der sich das primäre Strömungsregelungsteil (218) vom Ventilsitz (222) löst, und wobei sich der langestreckte Abschnitt vom Hülseneinsatz (226) weg bewegt, wenn sich das primäre Strömungsregelungsteil (218) zwischen der Zwischenstellung und einer vollständig offenen Stellung des Fluidventils (200) bewegt.

9. Ventilgarniturvorrichtung nach Anspruch 1, wobei sich das sekundäre Strömungsregelungsteil (220) in Bezug auf den Hülseneinsatz (226) bewegt, um eine Fluidströmung zwischen einem Einlass (208) und einem Auslass (210) des Fluidventils (200) zu drosseln.

10. Ventilgarniturvorrichtung nach Anspruch 1, wobei das sekundäre Strömungsregelungsteil (220) in den Hohlraum (238) des Verschlussteils (216) eingeschrumpft und vom primären Strömungsregelungsteil (218) umgeben ist.

11. Ventilgarniturvorrichtung nach Anspruch 1, wobei:
das primäre Strömungsregelungsteil (218) eine Metallauflagefläche (228) aufweist, und das sekundäre Strömungsregelungsteil (220) eine Keramikdrosselfläche (230) aufweist, die von der Metallauflagefläche (228) umgeben ist, wobei sich die Keramikdrosselfläche (230) in Bezug auf einen Durchlass (232) des Hülseneinsatzes (226) bewegt, um einen Druckabfall an der Metallauflagefläche (228) zu mindern, wenn sich das Verschlussteil (216) vom Ventilsitz (222) löst.

12. Ventilgarniturvorrichtung nach Anspruch 11, wobei das Metallmaterial eine Metalllegierung umfasst, und das Keramikmaterial Carbid umfasst.

13. Ventilgarniturvorrichtung nach Anspruch 11, wobei die Keramikdrosselfläche (230) einen langgestreckten Abschnitt aufweist, der zum Hülseneinsatz (226) des Ventilsitzes (222) hin vorsteht.

14. Ventilgarniturvorrichtung nach Anspruch 11, darüber hinaus eine Buchse (252) mit einer Öffnung zur Aufnahme zumindest eines Abschnitts des Hülseneinsatzes (226) aufweisend, und wobei die Buchse (252) und der Ventilsitz (222) einstückig als eine einheitliche Struktur ausgebildet sind.

15. Ventilgarniturvorrichtung nach Anspruch 12, wobei der Hülseneinsatz (226) in die Öffnung der Buchse (252) eingeschrumpft ist.

## Revendications

1. Dispositif d'organe interne de soupape (202) à utiliser avec une soupape à fluide (200), comprenant :
- un siège de soupape (222) composé d'un matériau non céramique et comportant un insert de manchon (226) composé d'un matériau céramique; et
- un élément de fermeture (216) comportant un élément de commande d'écoulement primaire (218) et un élément de commande d'écoulement secondaire (220), l'élément de commande d'écoulement secondaire (220) étant composé du matériau céramique et étant ajusté à l'intérieur d'une cavité (238) de l'élément de fermeture (216), dans lequel l'élément de commande d'écoulement primaire (218) est destiné à engager de façon étanche le matériau non céramique du siège de soupape (222) et l'élément de commande d'écoulement secondaire (220) est destiné à se déplacer à l'intérieur d'une ouverture (232) de l'insert de manchon (226) pour moduler un écoulement de fluide à travers le siège de soupape (222) lorsque l'élément de commande d'écoulement primaire (218) se désengage du matériau non céramique du siège de soupape (222).

2. Dispositif d'organe interne de soupape selon la revendication 1, dans lequel l'élément de commande d'écoulement primaire (218) est constitué du matériau non céramique.

3. Dispositif d'organe interne de soupape selon la revendication 1, dans lequel le matériau non céramique comprend un alliage métallique.

4. Dispositif d'organe interne de soupape selon la revendication 1, comprenant en outre une doublure (252) destinée à retenir le siège de soupape (222) et l'insert de manchon (226) à l'intérieur d'un corps (204) de la soupape à fluide (200) et dans lequel la doublure (252) comprend un corps allongé (256).

5. Dispositif d'organe interne de soupape selon la revendication 4, dans lequel l'insert de manchon (226) est ajusté par retrait à l'intérieur d'une ouverture de la doublure (252) et le siège de soupape (222) est formé intégralement avec la doublure (252).

6. Dispositif d'organe interne de soupape selon la revendication 1, dans lequel l'insert de manchon (226) comporte une ouverture présentant une surface intérieure profilée.

7. Dispositif d'organe interne de soupape selon la revendication 1, dans lequel l'élément de commande d'écoulement secondaire (220) comprend un bouchon de soupape (244) comportant une base (246) disposée à l'intérieur de la cavité (238) de l'élément de fermeture (216) et une partie allongée (248) dimensionnée de façon à engager l'insert de manchon (226) sur une partie d'une longueur de course totale de l'élément de commande d'écoulement primaire (218) afin de procurer une zone morte effective de l'écoulement de fluide.

8. Dispositif d'organe interne de soupape selon la revendication 7, dans lequel la partie allongée (248) reste engagée avec l'insert de manchon (226) lorsque l'élément de commande d'écoulement primaire (218) se déplace entre une position fermée dans laquelle l'élément de commande d'écoulement primaire (218) engage de façon étanche le siège de soupape (222) et une position intermédiaire dans laquelle l'élément de commande d'écoulement primaire (218) se désengage du siège de soupape (222), et dans lequel la partie allongée s'écarte de l'insert de manchon (226) lorsque l'élément de commande d'écoulement primaire (218) se déplace entre la position intermédiaire et une position complètement ouverte de la soupape à fluide (200).

9. Dispositif d'organe interne de soupape selon la revendication 1, dans lequel l'élément de commande d'écoulement secondaire (220) se déplace par rapport à l'insert de manchon (226) pour étrangler un écoulement de fluide entre une entrée (208) et une sortie (210) de la soupape à fluide (200).

10. Dispositif d'organe interne de soupape selon la revendication 1, dans lequel l'élément de commande d'écoulement secondaire (220) est ajusté par retrait à l'intérieur de la cavité (238) de l'élément de fermeture (216) et est entouré par l'élément de commande d'écoulement primaire (218).

11. Dispositif d'organe interne de soupape selon la revendication 1, dans lequel:
- l'élément de commande d'écoulement primaire (218) présente une surface de siège métallique (228); et
- l'élément de commande d'écoulement secondaire (220) présente une surface d'étranglement céramique (230) entourée par la surface de siège métallique (228), dans lequel la surface d'étranglement céramique (230) se déplace par rapport à une ouverture (232) de l'insert de manchon (226) de façon à réduire une chute de pression à travers la surface de siège métallique (228) lorsque l'élément de fermeture (216) se désengage du siège de soupape (222).

12. Dispositif d'organe interne de soupape selon la revendication 11, dans lequel le matériau métallique comprend un alliage métallique et le matériau céramique comprend un carbure.

13. Dispositif d'organe interne de soupape selon la revendication 11, dans lequel la surface d'étranglement céramique (230) comporte une partie allongée qui est saillante en direction de l'insert de manchon (226) du siège de soupape (222).

14. Dispositif d'organe interne de soupape selon la revendication 11, comprenant en outre une doublure (252) qui présente une ouverture destinée à recevoir au moins une partie de l'insert de manchon (226), et dans lequel la doublure (252) et le siège de soupape (222) forment ensemble une structure unitaire.

15. Dispositif d'organe interne de soupape selon la revendication 12, dans lequel l'insert de manchon (226) est ajusté par retrait à l'intérieur de l'ouverture de la doublure (252).
